Europäisches Patentamt

European Patent Office

Office européen des brevets

(19)

(11) **EP 1 246 383 A1**

(12) **EUROPEAN PATENT APPLICATION**

(43) Date of publication:
**02.10.2002 Bulletin 2002/40**

(51) Int Cl.⁷: **H04J 3/16**, H04J 3/07, H04J 3/06

(21) Application number: **01302929.3**

(22) Date of filing: **28.03.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **LUCENT TECHNOLOGIES INC.**
**Murray Hill, New Jersey 07974-0636 (US)**

(72) Inventors:
  • **Bayer, Ludwig, Dr.**
    **Eckental, Bavaria 90542 (DE)**
  • **Bleisteiner, Bernd**
    **Fuerth, Bavaria 90765 (DE)**
  • **Robledo, Miguel, Dr.**
    **Nuernberg, Bavaria 90411 (DE)**
  • **Nuetzel, Bertram**
    **Hersbruck, Bavaria 91217 (DE)**

(74) Representative: **Sarup, David Alexander et al**
    **Lucent Technologies UK Limted,**
    **5 Mornington Road**
    **Woodford Green, Essex IG8 OTU (GB)**

(54) **Data transmission system**

(57) The invention relates to a data transmission system and a method, in general, and to a data transmission system and a method for frame-oriented digital data, in particular.

A portion of the frame alignment word (FAW) in the overhead of the synchronous digital hierarchy (SDH) frame or of the synchronous optical network (SONET) frame is used for rate adaptation purposes.

Exemplarily in an STM-16/OC-48 signal 13 bytes of the frame alignment word is used to embed rate adaptation data. More precisely the frame alignment word comprises each 48 known A1 and A2 values from which 13 bytes are replaced by the rate adaptation data. Those 13 bytes are four stuff bytes, one signalling byte, one parity compensation byte, one stuff control byte, a three byte pointer and three byte for error protection by a Hamming code. The rate adaptation data are later replaced by the respective original values A1 or A2.

Consequently and advantageously, data are transmitted data and timing transparent. Furthermore, hardware and software requirements are reduced.

EP 1 246 383 A1

**Description**

Field of the Invention

The invention relates to a data transmission system, a method, and a device in general, and to a data transmission system, a method and a device for frame-oriented digital data, in particular.

Background if the Invention

The importance of digital data transmission for the information society of the 21st Century is increasing strongly. Important applications for this are, for example, voice and data transmission in telecommunication networks and via the Internet. A major part of digital data transmission is presently accomplished by means of optical signals via optically conducting fibres, since transmission via an optical channel (OCh) generally permits higher data rates than transmission of electric signals via metallic conductors. The invention is preferably applied, but not restricted to optical transmission.

Standards are defined by the International Telecommunication Union (ITU) in order to ensure compatibility of the data formats between different users in a network. Frequently used standards are the ITU-T G.813, ITU-T G.958, ITU-T G.825, ITU-T G.707 and ITU-T G.975 standards. Hereby, said standards and documents are incorporated as subject matter of the present disclosure by reference.

A flexible data format is achieved by virtue of the fact that the data are embedded in frames which typically contain an overhead and payload data sections (payload envelopes). The payload data to be transmitted are embedded in these payload sections or payload areas. The overhead serves in this case, inter alia, for transmitting control information. Regarding the processing of overheads of optical channels in the case of frame-oriented data transmission via optical channels, reference may also be made to Ballintine, J.E. "Data Format and Generic Processing for OCh-OH", wave star, volume 420.200.11, issue 1.0. Hereby, said document is incorporated as subject matter of the present disclosure by reference.

In order to transmit a plurality of client signals or clients via the same physical channel, the client signals are typically multiplexed. For example, four client signals or secondary streams with data rates of respectively 2.488 gigabits per second (Gbit/s) ($\approx$ 2.5 Gbit/s) are mapped into a server signal or server of approximately 9.953 Gbit/s using time-division multiplex operation. Known data hierarchies typically used for this purpose are the synchronous digital hierarchy (SDH) and the synchronous optical network (SONET).

In these known transmission systems in accordance with SDH or SONET, data are typically transmitted by means of synchronous transport modules (STM). A synchronous transport module contains a dedicated STM section overhead (STM-SOH) and a payload data section or payload envelope in which virtual containers with payload data are embedded.

A central problem in digital data transmission is the handling of different data rates between the client signals and the server signal. For example, if the rate of the client signal is higher than the rate of the server signal, excess data must be stored as stuff bytes in stuff locations (negative stuff opportunities) in order to achieve rate adaptation. For this purpose, each synchronous transport module in the section overhead contains three stuff bytes for rate adaptation or matching. In order to locate the start of the virtual container, which start can be displaced by the stuffing, there is, moreover, located in the section overhead of each synchronous transport module a pointer which points as start value to the first byte of the virtual container and is decremented or incremented during stuffing. In the transmission of the synchronous transport modules in accordance with SDH or SONET standards stuff locations are therefore reserved inside each STM section overhead.

However, using known frame structures and so-called STM-N/OC-M multiplexers which operate according to the ITU-T G. 707 standard, the section overhead (SOH) is always terminated. Those hierarchies are therefore data transparent and timing transparent only with reference to the administrative data units (AU-x data units) of the synchronous digital hierarchy, and with reference to the equivalent data units of the synchronous optical network and to the payload data. The original timing and the STM section overhead are not transmitted or propagated.

Consequently, the synchronous digital hierarchy and the synchronous optical network are not data transparent and not timing transparent or more precisely are not completely data transparent and not completely timing transparent. That is to say bit-by-bit data preservation is not ensured during transmission.

This method proves, however, to be disadvantageous, as, inter alia, the outlay on hardware and software is increased, as it may be necessary to generate a new overhead in the receiver. Therefore those aforementioned frame structures or multiplexing techniques require a high and cost intensive outlay on hardware and software.

Therefore, it is an object of the invention to provide a digital data transmission system, a method and a device which avoid or at least reduce the disadvantages of the prior art.

A further object of the invention is to provide a transmission system and a method which enable improved rate adaptation between a client signal or client signals and a server signal.

Still a further object of the invention is to provide a transmission system and a method which cause a lesser degree of complexity and a lower outlay on costs.

Still a further object of the invention is to provide a transmission system and a method which enable reliable data transmission at a low bit error rate.

These objects are achieved in a surprisingly simple manner by the transmission system, the method and the device which are defined by Claims 1, 30 and 34.

The transmission system according to the present invention provides a frame-oriented transmission of digital data, comprising a server signal and at least a first client signal. Said server signal comprises a server frame structure and data of said first client signal are embedded in said server frame structure. First data for rate adaptation between the server signal and the first client signal are provided and said transmission is data transparent.

Such data transparency is highly advantageous as the data are preserved bit-by-bit, thereby simplifying hardware and software and, consequently, reducing complexity and costs. In other words, the data stream is transmitted, multiplexed and/or de-multiplexed bit-by-bit.

Furthermore it is advantageous that the data rate of the generated data stream keeps constant during transmission, multiplexing and/or de-multiplexing, in particular the data rate is neither increased nor reduced.

Preferably the whole first client signal or at least essentially the whole first client signal is transmitted data transparent. Data transparency of the whole data stream is advantageous as it can be applied for signals with known and unknown data structure. Therefore the system is future proof. Furthermore the signal is bit-by-bit restored when received or after de-multiplexing as it is transmitted or multiplexed.

Furthermore, transmission is preferably timing transparent with respect to the data of the first client signal, i. e. the timing related to the data of the first client signal is preserved during the transmission.

Timing transparency of the datastream is advantageous as the signal can be used for synchronization purposes after reception or de-multiplexing.

Preferably, said first client signal is a frame-oriented signal, e.g. according to SDH or SONET standards. However, the transmission system is suitable for non-frame-oriented client signals, e.g. in accordance with the Ethernet standard or the Internet Protocol (IP). Advantageously, the present transmission system is, therefore, very flexible.

Preferably, said first client signal comprises a client frame structure, e.g. according to the STM-N G.707 standard of the ITU-T or according to OC-M standard. Such frame structure comprises a data portion reserved for overhead data, the so-called section overhead (SOH). Preferably, the overhead also comprises a data portion for administrative unit pointers. Furthermore, said client frame structure comprises a portion for embedding payload data, e.g. an STM-N or OC-M payload envelope. The actual data to be transmitted with the first client signal are embedded in that payload envelope.

Advantageously, not only the payload data, but also at least a portion of the overhead data, e.g. at least a portion of the section overhead, in particular at least a portion of the regenerator section overhead RSOH and/or at least a portion of the multiplexing section overhead MSOH of the first client signal, is or are transmitted data transparent. Preferably a multiplexer or multiplexing device for time division multiplexing is used. Beneficially, the requirements for terminating the overhead, in particular the section overhead, of SDH/SONET signals for hardware and software is lower than in current systems. Therefore, a faster time-to-market can be achieved due to less effort and more cost effectiveness.

In a preferred embodiment said payload data and at least a portion of said overhead data, in particular at least a portion of the regenerator section overhead RSOH, are embedded in said server frame structure of said server signal. With respect to the server frame structure said portion of the overhead data are processed like payload data.

In a further preferred embodiment said section overhead comprises at least a first data sequence having predetermined values, e.g. A1 and A2 bytes of the STM-N-SOH or OC-M-SOH. Said predetermined or known values preferably form a frame alignment word or are at least a portion of said client frame structure. Said data having predetermined values or a predetermined number of bytes of said frame alignment word are replaced by said first data for rate adaptation, e.g. when the first client signal is multiplexed to the server signal. Heretofore said first data sequence or said predetermined bytes of the frame alignment word are terminated, e.g. with multiplexing and are later reinserted, e.g. with de-multiplexing.

At this point it should be noted, that this procedure could also be termed "pseudo data transparent", as said first data sequence is not directly transmitted, but is terminated and later the same values are reinserted. Therefore, the received data are bit-by-bit the same as if data would have been transmitted bit-by-bit. Consequently, for a receiver of the data after de-multiplexing it at least appears as a bit-by-bit transmission. Therefore, in this disclosure terminology "data transparent" should be understood comprising the previously so-called "pseudo data transparency". In other words, according to this disclosure, data transparent means that the same bit stream or byte stream is received as it is transmitted, even though some bits or bytes are terminated and reinserted intermediately.

Preferably, said first data sequence is replaced by said first data for rate adaptation with multiplexing prior to transmission and said first data for rate adaptation are replaced with de-multiplexing by the same predetermined or known values as they had before the multiplexing.

In a preferred embodiment, data of predetermined data positions in said client frame structure, e.g. some of the A1 and A2 bytes are put into predetermined data positions or bytes in said server frame structure, e.g. at the beginning of the server frame section overhead.

Preferably, said first data sequence of the section overhead of the frame server structure which is replaced by said first data for rate adaptation is a portion or a predetermined number of said frame alignment word.

As the frame alignment word is preferably significantly longer than said first data for rate adaptation, said first data sequence can have different positions in said frame alignment word, such that the position of said first data sequence in the frame alignment word is programmable, e.g. by hardware or software, or is fixed.

Preferably, said first data for rate adaptation comprise a predetermined number of data units or bytes. The inventors have found that 13 bytes are sufficient for proper rate adaptation including error protection for multiplexing four OC-48 client signals into an OC-192 server signal. However, any other number of rate adaptation bytes, e.g. 10, 11, 12, 14, 15, 16 or more bytes is also suitable, wherein better error protection or higher order multiplexing can be provided with a higher number of rate adaptation bytes.

Said first data for rate adaptation or rate adaptation bytes which are inserted in the section overhead of the server signal instead of the predetermined bytes of the frame alignment word comprise stuffing opportunities or stuff bytes and/or a pointer addressing a predetermined byte of the data of said first client signal and/or stuff control data and/or parity compensation data and/or signalling data. In a most preferred embodiment said pointer comprises 2, 3, 4, 5 or more bytes, most preferred 3 bytes. Preferably said pointer addresses the J0-byte of an STM-N or OC-M frame structure of the first client signal.

Most preferably, said first data for rate adaptation, in particular said 3-byte-pointer and said stuff control data are error protected by a Hamming Code.

As aforementioned, essentially embedding a first client signal in a server signal is described. However, advantages of the invention become even more important when a plurality of client signals is multiplexed to a server signal by a multiplexing device or a multiplexer. Exemplarily, multiplexing of 4 OC-48 clients to a OC-192 server or 16 OC-12 clients to a OC-192 server is provided. However, the invention is suitable also for nearly any other signal rate.

It remains to be mentioned that unless expressly denoted, wordings first and second do not fix a temporal sequence but is used for distinguishing purposes.

The invention is explained in more detail below by means of exemplary embodiments and with reference to the drawings.

Brief Description of the Figures

It is shown in

Fig. 1      a schematic diagram of an OC-M frame structure,
Fig. 2      a schematic diagram of an OC-48 section overhead,
Fig. 3      a schematic diagram of an OC-48 frame alignment word,
Fig. 4      the meaning of bytes used for rate adaptation,
Fig. 5      a schematic description of a control byte,
Fig. 6      an assignment of client signal numbers to 2 bits in the control byte of Fig. 5,
Fig. 7      two subsequent OC-48* frames as defined according to the present invention,
Fig. 8      a description of the pointer values of Fig. 4,
Fig. 9      a composition of a HC(7, 4, 3) hamming code word referring bit #i and
Fig. 10    a schematic diagram of the composition of byte Z, used for signalling.

Detailed Description of the Invention

In the following, the system and method is described exemplarily for OC-48 signals. Multiplexing of four OC-48 signals to a 10G-server signal is described, but it is clear to those skilled in the art that the invention can also be applied to OC-M signals with any other rate, i.e. for any value of M. Furthermore, it should be noted that the invention can also be used for any STM-N signal, as STM-N signals are nearly equivalent to OC-M signals, wherein it is $M = 3 \times N$.

The transmission system according to this preferred embodiment of the invention uses certain overhead bytes of the signals which are previously not used. By this, data and timing transparency or data and timing transparent multiplexing is enabled.

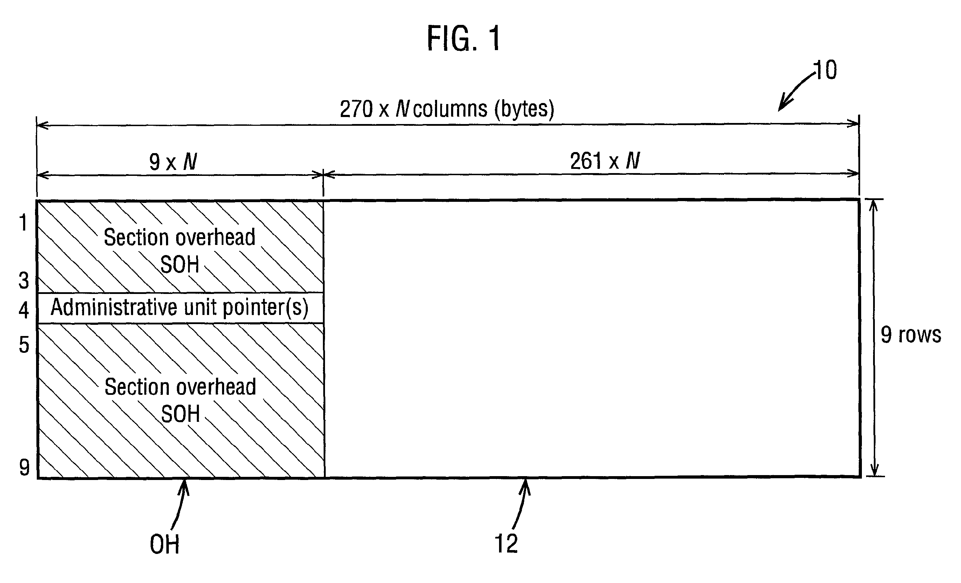

Referring to Fig. 1 an OC-M frame structure 10 comprising a payload section 12 and an overhead OH is shown. The OC-M frame structure 10 comprises $270 \times N$ columns or bytes, wherein the overhead OH comprises $9 \times$

N bytes and the payload section 12 comprises 261 × N bytes, wherein N = M/3. The frame structure 10 further comprises 9 rows, wherein rows 1 to 3 and 5 to 9 are reserved for a section overhead SOH and row 4 is reserved for administrative unit pointers.

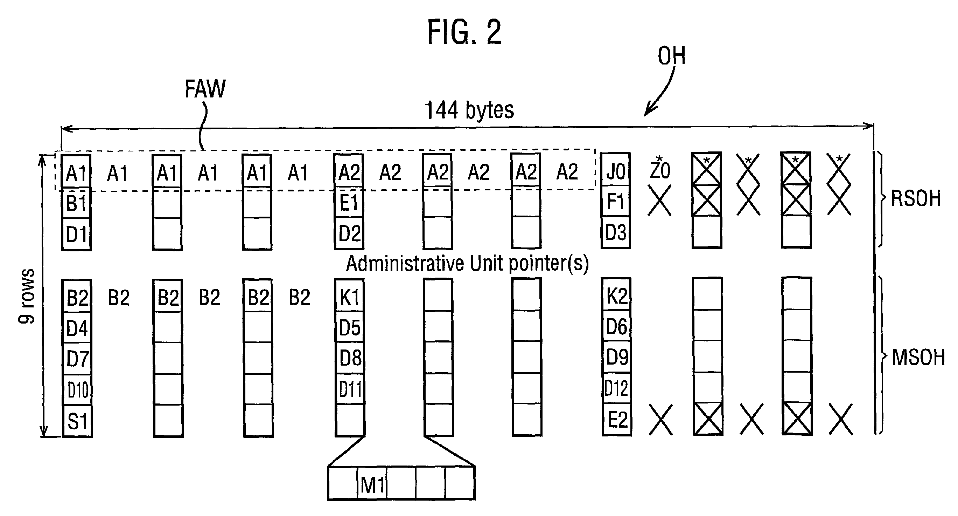

Referring now to Fig. 2 the OC-M overhead OH of the frame structure shown in Fig. 1 is described in more detail for M = 48 or N = 12, respectively. The overhead OH comprises or consists of 144 columns times 9 rows. As can be seen further in Fig. 2 the first 96 bytes of the first row comprise A1 bytes followed by A2 bytes. Said A1 and A2 bytes serve as frame alignment word FAW. The first byte after the A1 and A2 bytes is the so-called J0 byte. Said frame alignment word reserves a portion of a regenerator section overhead RSOH which is located in rows 1 to 3, whereas in rows 5 to 9 a multiplexing section overhead MSOH is located.

The frame alignment word FAW is a portion of the section overhead SOH, more precisely of the regenerator overhead RSOH of the synchronous digital hierarchy SDH frame or of the synchronous optical network SONET frame. In the exemplary OC-48/STM-16 signals the frame alignment word FAW comprises 48 bytes "A1 " and 48 bytes "A2", such that the number of FAW bytes $N_{FAW}$ is $N_{FAW}$ = 96.

The FAW bytes have according to the ITU-T G.707 standard always the fixed values A1 = F6h and A2 = 28h (hexadecimal notation).

In transmission systems only a small number of the FAW bytes, typically about 5 to 8 bytes, are used for framing and framing supervision purposes. That means a large number of the bytes are unused. Some of those previously unused bytes are used for rate adaptation purposes according to the present invention.

The values of the FAW bytes are fixed or known and can therefore easily be replaced and recovered later.

Those OC-M structures shown in Fig. 1 and Fig. 2 are generally known to those skilled in the art and are described in more detail e.g. in ITU-T G.707 standard.

10G - OC-48 Multiplexing with Rate Adaptation

In the following, a system, a method and a multiplexer for mapping four independent OC-48 data streams or client signals into one OC-192* server signal is described. The OC-48 signals pass through unchanged and the system behaves as a SONET/SDH repeater. Timing transparency is provided.

A rate adaptation algorithm is provided using a number of $N_{RA}$ bytes of the frame alignment word FAW for rate adaptation. The inventors found that $N_{RA}$ =13 bytes are sufficient for this exemplary embodiment. In this exemplary embodiment 13 of the A2 bytes are used. However it is clear to those skilled in the art that other predetermined or known bytes, e.g. some of the A1 bytes and/or using more than 13 bytes, in particular for higher order multiplexing is also appropriate.

However, it is possible that a client of the network already uses some of the overhead bytes which should actually be unused. If the location of the "mis-used" FAW bytes is known, the locations of the FAW bytes which are used for the system according to this invention are kept programmable by hardware or software, i.e. are flexible. In general the invention provides of carrying G.707 standard conform STM-N/OC-N data signals. To keep the approach flexible, the location of the used FAW bytes, i.e. the specific ones of the A1 or A2 bytes to be replaced can be chosen or programmed by the user.

At this point the definition of the term data transparent becomes more clear. The frame alignment word FAW {A1, A2} is terminated and reinserted. In fact the complete RSOH is terminated in each SONET/SDH network element, i.e. including the frame alignment word FAW. So the method introduced here is a kind of repeater preserving all of the SONET/SDH frame except the frame alignment word FAW whose values are well defined. The transmit frequency is not increased using this method. Furthermore, the client signals as transmitted and the client signals as received are bit-by-bit equivalent.

Moreover, as described in section "B1 Parity Compensation" below, bit errors may appear in the data, i.e. also in the frame alignment word FAW, at some point between the transmitter and the receiver. Such bit errors in the frame alignment word are preferably corrected by the system according to the invention. In this case a bit-by-bit identity is still at least provided of the first client signal as transmitted by the transmitter and as received by the receiver, even though, a bit-by-bit identity of the data stream might not be existing at all times or all locations in the network between the transmitter and the receiver. Preferably, this also applies for all further client signals, if a plurality of those is multiplexed. Therefore, the transmission is called data transparent.

By performing the rate adaptation according to the invention the regular OC-48 frame is transposed to a new OC-48* frame. This new OC-48* frame according to the invention comprises or consists of the same number of rows and columns, i.e. number of bytes, as the regular OC-48 frame. The byte locations of the frame alignment word FAW are identical to that of the regular OC-48 frame. For rate adaptation purposes the actual payload, i.e. the whole OC-48 frame without frame alignment word FAW, floats within the OC-48* frame referred by a pointer. More precisely, a pointer V addresses the J0-byte of the OC-M section overhead. Furthermore, a certain number of bytes of the frame alignment word FAW is used for stuffing, control and signalling purposes.

Utilization of the OC-48 Frame Alignment Word

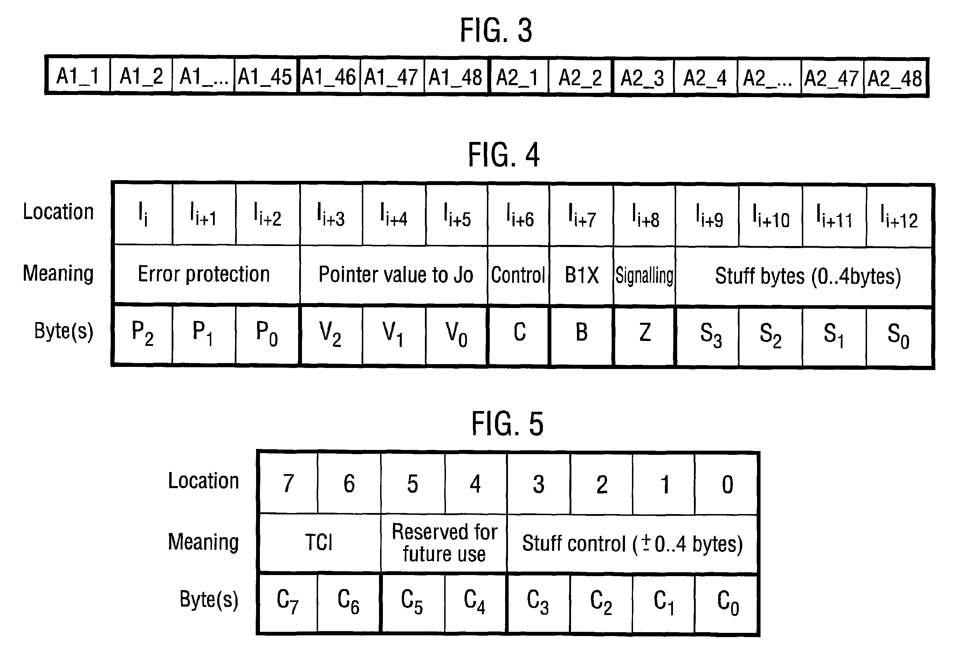

As the clients or tributaries are only OC-48 signals, portions of the frame alignment word FAW can be used for stuffing purposes. Fig. 3 schematically shows the structure of a OC-48 frame alignment word FAW. The A1_.. and A2_.. bytes represent each a sequence of the respective bytes which are not shown. The FAW comprises 48 x A1 (A1_1, ..., A1_48) followed by 48 x A2 (A2_1, ..., A2_48), where the bytes have fixed values A1 = F6h and A2 = 28h according to ITU G.707.

In some equipment, e.g. by Lucent Technologies Inc. only five bytes, i.e. A1_46, A1_47, A1_48, A2_1 and A2_2 are actually used for framing purposes. The remaining framing bytes still have fixed values and are preliminary unused.

Structure of the Data for Adaptation

As mentioned in the previous section the framing bytes A1_1, ..., A1_45 and A2_3, ..., A2_48 are typically not used. Therefore a number $N_{RA}$ of the FAW bytes are used for rate adaptation, i.e. stuffing, control and administration purposes. Most preferably, the last 13 bytes of the frame alignment word, i.e. bytes A2_ 36 to A2_48 are used. The structure of the sequence of 13 rate adaptation bytes is shown in Fig. 4 and is as follows:

$N_S$ = 4 stuff bytes ($S_0$, $S_1$, $S_2$, $S_3$) are used for negative stuffing, i.e. due to a higher client or tributary frequency some bytes have to be stuffed and transported here;

$N_C$ = 1 stuff control byte (C) steers the rate adaptation procedure;

$N_{B1}$ = 1 byte (B) is used for B1 parity compensation;

$N_V$ = 3 bytes ($V_0$, $V_1$, $V_2$) are used for a pointer to address the location of the J0-byte of an OC-48 SONET frame. As an OC-48 frame comprises $N_{OC48}$ = 38880 bytes a 2 bytes = 16 bits pointer providing $2^{16}$ = 65536 possible values is generally sufficient to address the J0-byte. However, to be tolerant of future enhancements the pointer value ($V_0$, $V_1$, $V_2$) is stored in $N_V$ = 3 bytes (24 bits, 16777216 = $2^{24}$ possible values) ;

The control information, i.e. the three pointer bytes and the one control byte are protected by a single error protecting Hamming code HC(7, 4, 3). An interleaved structure is applied to enhance burst error capabilities. The number of additional protection bytes, therefore, is $N_P$ = 3.

$N_Z$ = 1 byte (Z) is used for signalling e.g. Forward Defect Indication FDI, Backward Defect Indication BDI and/or Open Connection Indication OCI (i.e. Uneq);

All unused/reserved bits in the bytes used for rate adaptation are set to a fixed value, e.g. to "0"

Stuff Bytes

$N_S$ = 4 stuff bytes ($S_0$, $S_1$, $S_2$, $S_3$) are reserved for negative stuffing. Preferably, full bytes or multiples of bytes are stuffed.

Providing four stuff bytes, a jitter or frequency deviation $\Delta f_0$ up to $\Delta f_0$ = ± 100 ppm or even more can be compensated by the stuffing. This calculates as follows:

| | |
|---|---|
| $N_{OC48}$ = 38880 | (Number of bytes in an OC-48 frame) |
| $N_S$ = 4 | (number of stuff bytes used for negative stuffing) |
| $N_{A1}$ = 48 | (number of A1 bytes) |
| $N_{A2}$ = 48 | (number of A2 bytes) |
| $N_{FAW} = N_{A1} + N_{A2}$ = 96 | (number of FAW bytes) |
| $\Delta f_{0\ per\ Byte} = 1 / N_{OC48}$ = 25 ppm | (frequency deviation that can be buffered by using a single byte for negative stuffing) |

The frequency deviation that can be processed is basicly limited by the number of used or respectively available stuff bytes $N_S$. So generally the achievable frequency deviation of $\Delta f_0$ can be expressed as

$$\Delta f_0 = N_S\ /\ NOC48$$

$$= N_S\ *\ \Delta f_{0\ \text{per Byte}}$$

As for this exemplary embodiment four bytes are used for negative stuffing a frequency deviation of at least

$$\Delta f_0 = 4\ /\ NOC48 = 100\ ppm$$

can be compensated.

Stuff Control Byte

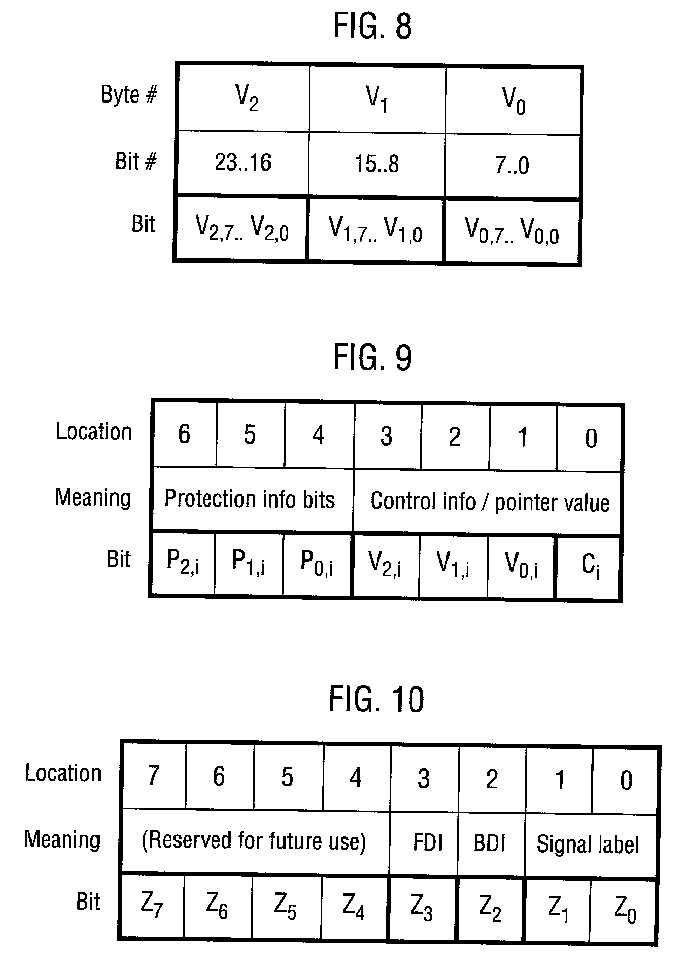

$N_C = 1$ stuff control byte is used for stuff control purposes. The structure of the stuff control byte C is shown in detail in Fig. 5. A counter reflecting the number of stuffed bytes ($\pm\ 0...4 \rightarrow 4$ bits; total range [-8, ..., +7]) is implemented. This counter is defined by four bits $C_0$, $C_1$, $C_2$ and $C_3$. Two Bits $C_4$ and $C_5$ are not used and are reserved for future use.
Two protected bits $C_7$, $C_6$ of the control byte are used as a client signal or tributary channel identifier TCI. Referring to Fig. 8, a certain 2-bits value is assigned to each client signal. These bits, or respectively this feature, is used for the so-called "roll control".

Pointer Value

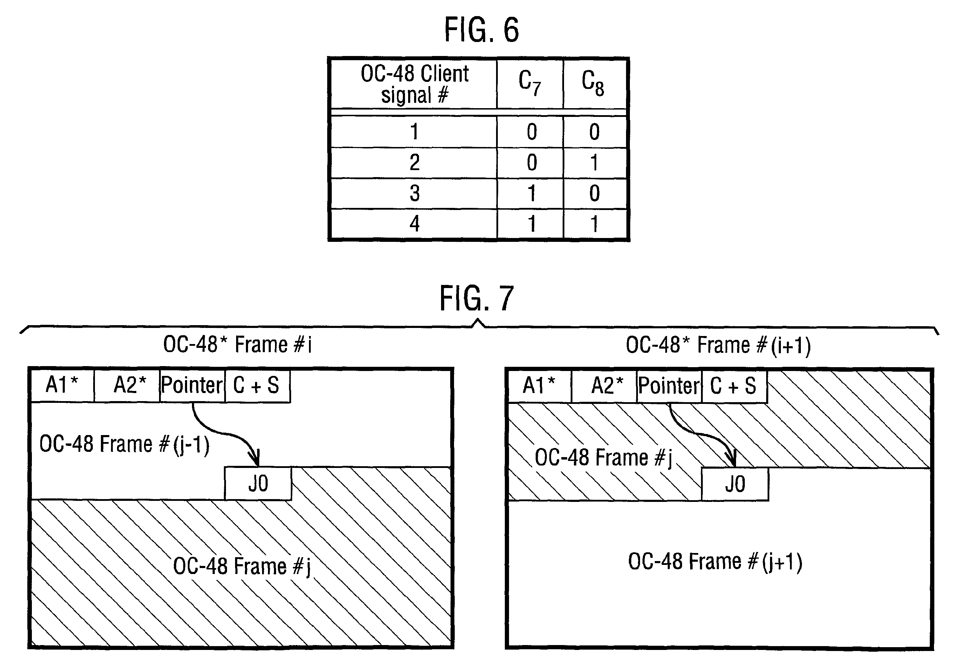

$N_V = 3$ bytes ($V_0$, $V_1$, $V_2$, $V_3$) are used for representing the pointer value. It refers to the J0 byte which is floating in the OC-48* frame as shown in Fig. 7. A client signal frame #j, represented by the hatched area, is distributed over two server frames #i and #(i+1). Therein the client signal frame #j start at the J0-byte of the server frame #i and ends at the J0-byte of the following server frame #(i+1).
Each server frame starts with a portion of the original frame alignment word FAW, represented by A1* and A2* bytes and the data for rate adaptation, represented by the pointer, the control bytes C and the stuff bytes S in this Fig. 7.
With a 24 bits or 3 bytes pointer a range of 16777216 bytes can be addressed. An OC-48 client signal comprises 38880 bytes, an OC-192 client signal comprises 155520 and an OC-768 client signal comprises 622080 bytes. Consequently, the pointer is prepared for further significant enhancements in the future. A pointer value description is shown in Fig. 8.

Error Protection

The $N_V = 3$ pointer bytes and the $N_C = 1$ control byte are protected by a single error correcting HC(7, 4, 3) Hamming code. Therefore $N_P = 3$ additional bytes for error control coding are provided within the data or 13 bytes for rate adaptation. The error correction mechanism is applied interleaved so that the protected bytes are robust against burst errors.
The composition of a 7 bits long Hamming HC(7, 4, 3) code word (systematic encoding) is shown in detail in Fig. 9.
As there are four bytes, i.e. three pointer bytes and one control byte, to be protected and 8 bits per byte, 8 coders are interleaved. In other words, the interleave factor is 8. That means 8 subsequent errors, i.e. a burst of 8 errors, can be corrected.

B1 Parity Compensation

A mechanism or method is provided to compensate the B1 parity value as parity errors are located in the frame alignment word FAW can appear. Therewith, errors in the frame alignment word FAW which are excluded with the reinsertion of the frame alignment word FAW are detected.
The suggested solution is to calculate the differential BIP-8 parity B over the complete actual frame alignment word FAW comprising the A1 and A2 bytes and the default frame alignment word FAW before creating a new OC-48* frame according to the invention.
$N_{B1} = 1$ byte is reserved for this purpose and is shown and denoted B in Fig. 4. This processing makes the received B1 neutral to the rate adaptation processing although the mechanism is not completely neutral concerning defective values of the A1's and A2's. The parity compensation byte B is calculated as follows:

$$B_{A1} = \sum_{i=0}^{N_{A1}} (A1_{act,i} \oplus A1_{def})$$

$$B_{A2} = \sum_{i=0}^{N_{A2}} (A2_{act,i} \oplus A2_{def})$$

$$B = B_{A_1} \oplus B_{A_2}$$

This compensation info or byte is transported in a designated location of the bytes used for rate adaptation as shown in Fig. 4. After adding (EXOR) the compensation value B to a certain byte of the frame alignment word FAW (e.g. A2_48) towards the OC-48 transmit interface, the whole error information is concentrated in one FAW byte. Due to that fact, the frame alignment word FAW includes less or equal errors than before. That behaviour can be interpreted as a kind of error correction capability since all A1 and A2 values have a well defined value. Theses "corrected" FAW bytes advantageously lead to a reduced probability of out of frame incidents.

Signalling

$N_z$ = 1 byte is used to carry signalling information as shown in detail in Fig. 10.
The specific bits can have the following values:

| Signal label | = 00 | (unequipped) |
|---|---|---|
|  | = 01 | (equipped non specific) |
|  | = 10, 11 | (reserved for future use) |
| BDI | = 0 | (no BDI; default value) |
|  | = 1 | (BDI) |
| FDI | = 0 | (no FDI; default value) |
|  | = 1 | (FDI) |

Summarising, the total number of bytes used for realising the rate adaptation according to the invention in a single OC-48 client or tributary data stream is

$$N_{RA} = N_S + N_C + N_{B1} + N_z + N_V + N_P =$$
$$= 4 + 1 + 1 + 3 + 1 + 3 = 13$$

This number of bytes is reserved in the OC-48* frame alignment word.

Jitter Requirements and Capabilities

The system should be capable of tolerating frequency deviations as requested by SDH/SONET standards of

| 1. $\Delta f_{Trib}$ < ±20 ppm | (maximal deviation of client or tributary, i.e. OC-48 datarate) |
|---|---|
| 2. $\Delta f_{OCh}$ < ±50 ppm | (maximal deviation of transmit, (i.e. |

(continued)

| OCh-10G datarate) |
| --- |

The jitter should, furthermore, fulfill the following requirements:

1. Jitter generation $J_G$

| a. $J_G < 0.01$ $UI_{rms}$ <br> b. $J_G < 0.1$ $UI_{pp}$ | (ITU G.958, p.13, section 5.3.1) <br> (ITU G.813, section 7.3, option 2, <br> bandpass [12 kHz ... 2 MHz]) |
| --- | --- |

2. Network limits for jitter $J_{NEL}$

| a. $J_{NEL} < 0.15$ $UI_{rms}$ | (ITU G.825, tab.1, section 3.1, <br> $[f_3 ... f_4] = [1$ MHz ... 20 MHz]) |
| --- | --- |
| b. $J_{NEL} < 1.5$ $UI_{pp}$ | (ITU G.825, tab.1, section 3.1, <br> $[f_1 ... f_4] = [5$ kHz ... 20 MHz]) |

The jitter requirements as described above are substantially all fulfilled or can even be surpassed using the system, method or device according to the invention.

Wander Requirements

At the moment no wander requirements to be fulfilled are known.

It will be appreciated that the above-described embodiment of the system, method and device according to the present invention has been set forth solely by way of example and illustration of the principles thereof and that further modifications and alterations may be made therein without thereby departing from the spirit and scope of the invention.

**Claims**

1.  A transmission system for frame-oriented transmission of digital data, comprising a server signal and at least a first client signal, wherein
    said server signal comprises a server frame structure,
    data of said first client signal are embedded in said server frame structure,
    first data for rate adaptation between the server signal and the first client signal are provided and
    said transmission is data transparent.

2.  The transmission system according to claim 1, wherein essentially the whole first client signal is transmitted data transparent.

3.  The transmission system according to claim 1 or 2, wherein said first client signal is a frame-oriented signal.

4.  The transmission system according to claim 1, 2 or 3, wherein said first client signal comprises a client frame structure, wherein payload data and overhead data of said first client signal are embedded in said client frame structure.

5.  The transmission system according to claim 4, wherein at least a portion of said overhead data is transmitted data transparent.

6.  The transmission system according to claim 4 or 5, wherein said payload data and at least a portion of said overhead data are embedded in said server frame structure of said server signal.

7. The transmission system according to claim 4, 5 or 6, wherein at least a first data sequence of said overhead data having predetermined or known values and are replaced by said first data for rate adaptation.

8. The transmission system according to claim 7, wherein said first data sequence is terminated and later reinserted.

9. The transmission system according to claim 7 or 8, wherein said replacing of said first data sequence by said first data for rate adaptation is provided prior to transmission and said first data for rate adaptation are replaced by the same values as those of said first data sequence after transmission.

10. The transmission system according to one of the preceding claims, wherein said first client signal comprises a client frame structure and first data of predetermined data positions in said client frame structure are put into predetermined data positions in said server frame structure.

11. The transmission system according to claim 10, wherein said first data comprise at least a portion of a frame alignment word.

12. The transmission system according to claim 10, wherein said first data comprise at least a portion of a frame alignment word of said client frame structure.

13. The transmission system according to claim 11 or 12, wherein the position of said first data sequence within said frame alignment word is programmable or fixed.

14. The transmission system according claim 11, 12 or 13, wherein said first data sequence is a portion of said frame alignment word.

15. The transmission system according to one of the preceding claims, wherein said first client signal is a signal according to synchronous digital hierarchy (SDH) standard or according to synchronous optical network (SONET) standard.

16. The transmission system according to one of the preceding claims, wherein said first client signal comprises OC-M frame structures or STM-N frame structures, preferably according to the ITU-T G.707 standard.

17. The transmission system according to one of the preceding claims, wherein said first data for rate adaptation comprise a predetermined number of data units.

18. The transmission system according to one of the preceding claims, wherein said first data for rate adaptation between the server signal and first client signal comprise stuffing opportunities.

19. The transmission system according to one of the preceding claims, wherein said first data for rate adaptation comprise a pointer addressing a predetermined byte of the data of said first client signal.

20. The transmission system according to claim 19, wherein said pointer comprises three bytes.

21. The transmission system according to claim 19 or 20, wherein said predetermined byte is the J0-byte of an STM-N-frame structure or OC-M-frame structure.

22. The transmission system according to one of the preceding claims, wherein said first data for rate adaptation comprise stuff control data.

23. The transmission system according to one of the preceding claims, wherein said first data for rate adaptation comprise parity compensation data.

24. The transmission system according to one of the preceding claims, wherein said first data for rate adaptation comprise signalling data.

25. The transmission system according to one of the pre-ceding claims, wherein said first data for rate adapta-tion are error protected, preferably by a hamming code.

**26.** The transmission system according to one of the preceding claims, whereindata of a second client signal are embedded in said server frame structure and

second data for rate adaptation between the server signal and the second client signal are provided in said server frame structure.

**27.** The transmission system according to claim 26, wherein

said first client signal is multiplexed with a second client signal,
data of a second client signal are embedded in said server frame structure,
said second data for rate adaptation are provided in said server frame structure.

**28.** The transmission system according to one of the preceding claims, wherein

a plurality of client signals is multiplexed,
data of each of the plurality of client signals are embedded in said server frame structure,
data for rate adaptation between the server signal and each of the client signals are provided in said server frame structure.

**29.** The transmission system according to claim 28, wherein said plurality of client signals comprises a number of client signals which is an integer power of two.

**30.** A method for frame-oriented transmission of digital data, comprising:

providing a server signal comprising a server frame structure,
providing at least a frame-oriented first client signal,
embedding data of said first client signal in said server frame structure,
providing data for rate adaptation between the server signal and the first client signal,
embedding said data for rate adaptation in said server frame structure.

**31.** The method of claim 30, wherein overhead and payload data of said first client signal are embedded in said server frame structure for transparent transmission.

**32.** The method of claim 30 or 31, wherein a pointer addressing a predetermined byte of the data of said first client signal is provided.

**33.** The method of one of the preceding method claims, wherein a plurality of frame-oriented client signals is multiplexed and embedded in the server signal and each a pointer is assigned to each of said client signals of said plurality of frame-oriented client signals and each of said pointers of the server signal is addressing a predetermined byte of the data of the respective client signal.

**34.** A device for embedding at least a digital first client signal into a digital server signal wherein said server signal comprises a server frame structure with an overhead and a payload section, said device comprising:

means for embedding data of said first client signal in said server frame structure,
means for providing first data for rate adaptation between the server signal and the first client signal and
means for replacing a plurality of predetermined bytes of said overhead of the server frame structure by said first data for rate adaptation.

# FIG. 1

270 x $N$ columns (bytes)

9 x $N$ | 261 x $N$

Section overhead
SOH

Administrative unit pointer(s)

Section overhead
SOH

9 rows

OH

12

10

EP 1 246 383 A1

# FIG. 2

FAW

OH

144 bytes

| A1 | A1 | A1 | A1 | A1 | A1 | A2 | A2 | A2 | A2 | A2 | A2 | J0 | Z̊0 | * | * | * | * |

RSOH

B1 ... E1 ... F1

D1 ... D2 ... D3

9 rows

Administrative Unit pointer(s)

B2 | B2 | B2 | B2 | B2 | B2 | K1 ... K2

MSOH

D4 ... D5 ... D6

D7 ... D8 ... D9

D10 ... D11 ... D12

S1 ... E2

M1

13

EP 1 246 383 A1

## FIG. 3

| A1_1 | A1_2 | A1_... | A1_45 | A1_46 | A1_47 | A1_48 | A2_1 | A2_2 | A2_3 | A2_4 | A2_... | A2_47 | A2_48 |

## FIG. 4

| Location | $I_i$ | $I_{i+1}$ | $I_{i+2}$ | $I_{i+3}$ | $I_{i+4}$ | $I_{i+5}$ | $I_{i+6}$ | $I_{i+7}$ | $I_{i+8}$ | $I_{i+9}$ | $I_{i+10}$ | $I_{i+11}$ | $I_{i+12}$ |
|---|---|---|---|---|---|---|---|---|---|---|---|---|---|
| Meaning | Error protection | | | Pointer value to Jo | | | Control | B1X | Signalling | Stuff bytes (0..4bytes) | | | |
| Byte(s) | $P_2$ | $P_1$ | $P_0$ | $V_2$ | $V_1$ | $V_0$ | C | B | Z | $S_3$ | $S_2$ | $S_1$ | $S_0$ |

## FIG. 5

| Location | 7 | 6 | 5 | 4 | 3 | 2 | 1 | 0 |
|---|---|---|---|---|---|---|---|---|
| Meaning | TCI | | Reserved for future use | | Stuff control ($\pm$ 0..4 bytes) | | | |
| Byte(s) | $C_7$ | $C_6$ | $C_5$ | $C_4$ | $C_3$ | $C_2$ | $C_1$ | $C_0$ |

## FIG. 6

| OC-48 Client signal # | $C_7$ | $C_8$ |
|---|---|---|
| 1 | 0 | 0 |
| 2 | 0 | 1 |
| 3 | 1 | 0 |
| 4 | 1 | 1 |

## FIG. 7

OC-48* Frame #i — A1* | A2* | Pointer | C + S — OC-48 Frame #(j-1) — J0 — OC-48 Frame #j

OC-48* Frame #(i+1) — A1* | A2* | Pointer | C + S — OC-48 Frame #j — J0 — OC-48 Frame #(j+1)

EP 1 246 383 A1

# FIG. 8

| Byte # | $V_2$ | $V_1$ | $V_0$ |
|---|---|---|---|
| Bit # | 23..16 | 15..8 | 7..0 |
| Bit | $V_{2,7}.. V_{2,0}$ | $V_{1,7}.. V_{1,0}$ | $V_{0,7}.. V_{0,0}$ |

# FIG. 9

| Location | 6 | 5 | 4 | 3 | 2 | 1 | 0 |
|---|---|---|---|---|---|---|---|
| Meaning | Protection info bits | | | Control info / pointer value | | | |
| Bit | $P_{2,i}$ | $P_{1,i}$ | $P_{0,i}$ | $V_{2,i}$ | $V_{1,i}$ | $V_{0,i}$ | $C_i$ |

# FIG. 10

| Location | 7 | 6 | 5 | 4 | 3 | 2 | 1 | 0 |
|---|---|---|---|---|---|---|---|---|
| Meaning | (Reserved for future use) | | | | FDI | BDI | Signal label | |
| Bit | $Z_7$ | $Z_6$ | $Z_5$ | $Z_4$ | $Z_3$ | $Z_2$ | $Z_1$ | $Z_0$ |

EP 1 246 383 A1

## EUROPEAN SEARCH REPORT

European Patent Office

Application Number

EP 01 30 2929

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 197 22 032 A (ROBERT BOSCH GMBH) 10 December 1998 (1998-12-10) * abstract * * column 1, line 11 – line 15 * * column 1, line 24 – line 26 * * column 2, line 58 – column 3, line 4 * * column 3, line 20 – line 31 * | 1–34 | H04J3/16 H04J3/07 H04J3/06 |
| X | WO 00 38362 A (MUELLER HORST (DE); SIEMENS AG (DE)) 29 June 2000 (2000-06-29) * abstract * * page 1, line 15 – line 21 * * page 2, line 1 – line 4 * * page 3, line 17 – line 31 * * page 5, line 13 – line 21 * | 1–6,10, 15–34 | |

TECHNICAL FIELDS SEARCHED (Int.Cl.7)

H04J

The present search report has been drawn up for all claims

| Place of search | Date of completion of the search | Examiner |
|---|---|---|
| MUNICH | 23 November 2001 | Chauvet, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

17

**ANNEX TO THE EUROPEAN SEARCH REPORT
ON EUROPEAN PATENT APPLICATION NO.**

EP 01 30 2929

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2001

| Patent document cited in search report | | Publication date | Patent family member(s) | | Publication date |
|---|---|---|---|---|---|
| DE 19722032 | A | 10-12-1998 | DE | 19722032 A1 | 10-12-1998 |
| | | | FR | 2764142 A1 | 04-12-1998 |
| | | | IT | MI981054 A1 | 27-11-1998 |
| WO 0038362 | A | 29-06-2000 | WO | 0038362 A1 | 29-06-2000 |

EPO FORM P0459

For more details about this annex : see Official Journal of the European Patent Office, No. 12/82